# EUROPÄISCHE PATENTANMELDUNG

(11) **EP 1 192 857 A2**
(43) Veröffentlichungstag der Anmeldung: **03.04.2002**
(21) Anmeldenummer: 01123010.9
(22) Anmeldetag: 26.09.2001
(51) Int. Cl.: A01M 7/00

(54) **Landwirtschaftliche Verteilmaschine**

(30) Priorität: 28.09.2000 DE 10048079
(71) Anmelder: Amazonen-Werke H. Dreyer GmbH & Co. KG, 49205 Hasbergen (DE)
(72) Erfinder: Ehlen, Volker, 29485 Lemgow (DE); Kirsten, Eckart, 04205 Leipzig (DE); Oberheide, Friedrich, 49143 Bissendorf (DE)

(57) **Zusammenfassung**

Landwirtschaftliche Verteilmaschine, insbesondere Feldspritze mit Vorratsbehälter (Flüssigkeitstank), einem Rahmen, einem Verteilergestänge, welches mittels eines Ober- und Unterlenker aufweisenden Parallelogrammgestänges an dem Rahmen befestigt und gegenüber dem Rahmen auf und ab bewegbar angeordnet ist, wobei das Parallelogrammgestänge nur einen Unterlenker und nur einen Oberlenker aufweist.

## Beschreibung

Die Erfindung betrifft eine landwirtschaftliche Verteilmaschine gemäß der Oberbegriffe der Patentansprüche 1 und 5.

Derartige Verteilmaschinen sind beispielsweise durch die EP-04 37 801 A1 bekannt. Um das Gestänge an dem Rahmen anzuordnen, weist dieses Parallelogrammgestänge bzw. diese Parallelogrammführungsvorrichtung insgesamt vier Lenker auf. Diese Ausbildung ist sehr aufwendig.

Der Erfindung liegt die Aufgabe zugrunde, ein einfach ausgebildetes Parallelogrammgestänge bzw. Parallelogrammführungsvorrichtung zu schaffen.

Diese Aufgabe wird in einer ersten Lösung dadurch gelöst, dass das Parallelogrammgestänge nur einen Unterlenker und nur einen Oberlenker aufweist. Infolge dieser Maßnahmen ergibt sich ein sehr einfach aufgebautes Parallelogrammgestänge, welches (in Fahrtrichtung gesehen) in der Mitte des Verteilergestänges und des Rahmens angeordnet ist.

Damit der einzige Unterlenker die gesamten Kräfte, die auf das Verteilergestänge einwirken aufnehmen kann, ist der Unterlenker als verwindungssteifer Hohlträger ausgebildet.

Um eine einfache Höheneinstellung des Verteilergestänges gegenüber dem Rahmen zu erreichen, ist vorgesehen, dass zwischen dem Rahmen und dem Unterlenker eine vorzugsweise als Hydraulikzylinder ausgebildete Verstelleinrichtung angeordnet ist.

Eine weitere Lösung der Aufgabe wird dadurch erreicht, dass die Parallelogrammführungsvorrichtung nur einen Lenker aufweist. Infolge dieser Maßnahmen wird sehr viel freier Bauraum geschaffen, da der einzige Lenker nur sehr wenig Raum beansprucht.

Damit der einzige Lenker die auftretenden Kräfte aufnehmen kann, ist vorgesehen, dass der Lenker als verbindungssteifer Höhlträger ausgebildet ist. Darüber hinaus wird eine stabile Anordnung des Verteilergestänges am Rahmen erreicht.

Um mit einem einzigen Lenker eine Parallelogrammführungsvorrichtung in einfacher Weise verwirklichen zu können, ist vorgesehen, dass zwischen dem Rahmen und dem Lenker sowie zwischen dem Lenker und dem Verteilergestänge jeweils eine vorzugsweise als Hydraulikzylinder ausgebildete Verstelleinrichtung angeordnet ist. Durch eine entsprechende Verbindung der beiden Hydraulikzylinder miteinander, lässt sich in sehr einfacher Weise eine Parallelogrammführungsvorrichtung erreichen. In das Hydrauliksystem lassen sich in einfacher Weise Dämpfungselemente integrieren, so dass eine vorteilhafte Abfederung des Verteilergestänges gegen den Rahmen und umgedreht erreicht wird.

Weitere Einzelheiten der Erfindung sind der Beispielsbeschreibung und den Zeichnungen zu entnehmen. Hierbei zeigen
- Fig. 1: die Gestängeaufhängung in perspektivischer Darstellung und in Prinzipdarstellung,
- Fig. 2: die Gestängeaufhängung in Seitenansicht in einer mittleren Position,
- Fig. 3: die Gestängeaufhängung in Seitenansicht in unterster Gestängeposition,
- Fig. 4: die Gestängeaufhängung in Seitenansicht, in Prinzipdarstellung und in oberster Gestängestellung und
- Fig. 5: eine weitere Gestängeaufhängung in der Seitenansicht und in Prinzipdarstellung.

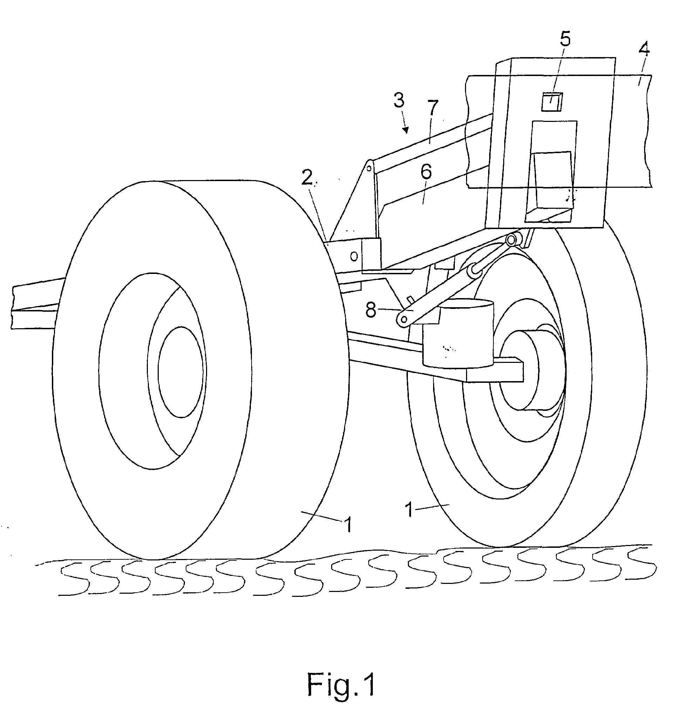

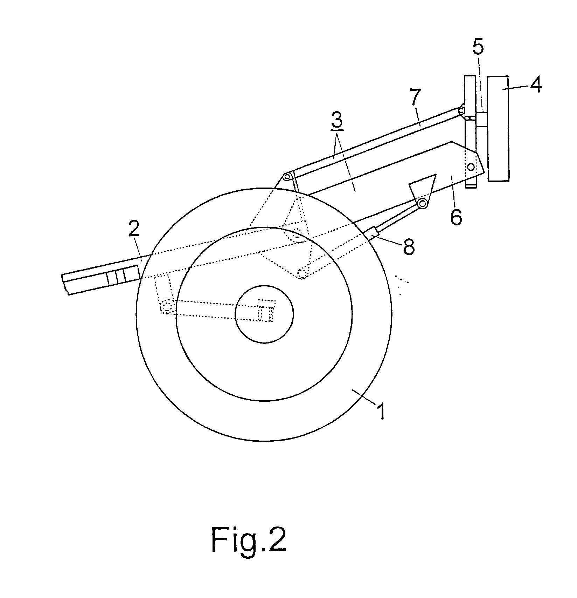

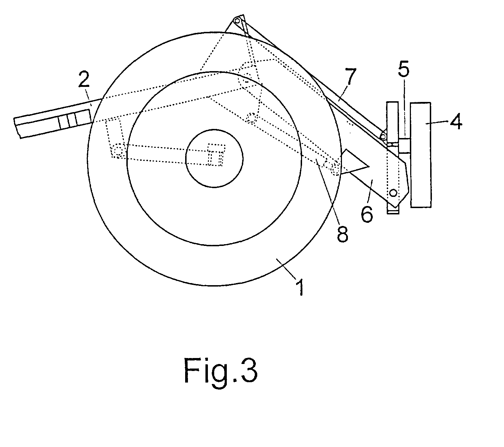

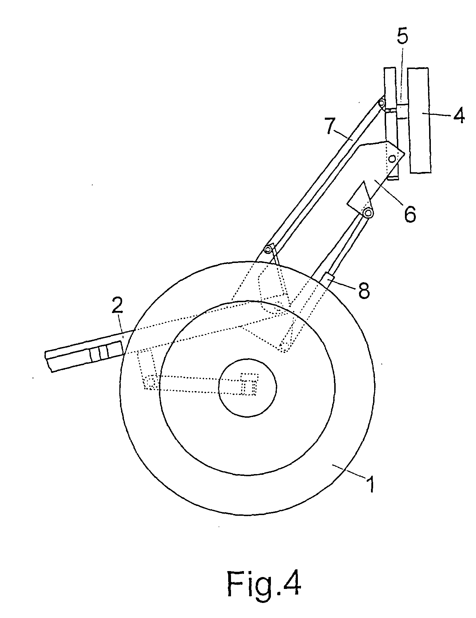

Von der landwirtschaftlichen Verteilmaschine ist in den Fig. 1 bis 4 lediglich ein Fahrwerk 1 und der hintere Teil des Rahmens 2 dargestellt. Auf dem Rahmen 2 ist ein nicht dargestellter als Flüssigkeitstank ausgebildeter Vorratsbehälter angeordnet. An Stelle einer gezogenen Verteilmaschine kann die Verteilmaschine auch als Dreipunktanbaumaschine oder Aufbaueinheit auf einen Selbstfahrer oder ein anderes Fahrzeug ausgebildet sein. An dem Rahmen 2 ist mittels eines Parallelogrammgestänges 3 ein angedeutetes Verteilergestänge 4 mittels einer Pendel- und Schwingaufhängung 5 in angedeuteter Weise angeordnet. Das Parallelogrammgestänge 3 weist nur einen Unter- 6 und einen Oberlenker 7 auf. Der Unterlenker 6 ist als verbindungssteifer Hohlträger ausgebildet. Zwischen dem Unterlenker 6 und dem Rahmen 2 ist eine als Hydraulikzylinder 8 ausgebildete Verstelleinrichtung angeordnet. Das Verteilergestänge 4, ist wie in den Fig. 2 bis 4 gezeigt, in die jeweils gewünschte Position zu bringen. Wie die Fig. 1 bis 4, insbesondere der Fig. 1 entnehmbar ist, beansprucht das Parallelogrammgestänge 3 nur einen sehr geringen Raum.

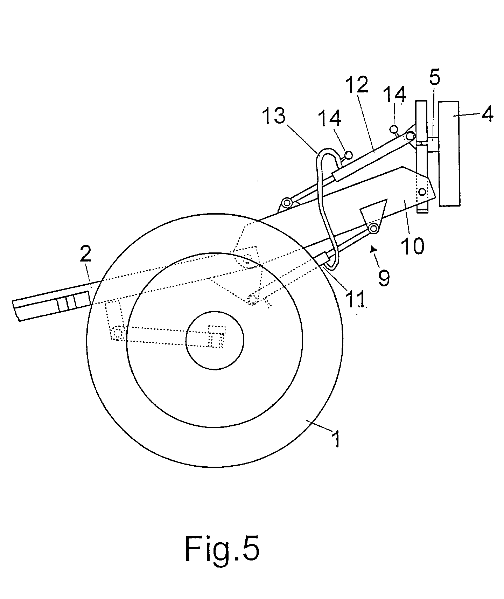

Die Fig. 5 zeigt eine weitere Parallelogrammführungsvorrichtung 9 zur Aufhängung eines Verteilergestänges 4 an einem Rahmen 2 einer landwirtschaftlichen Verteilmaschine. Diese Parallelogrammführungsvorrichtung 9 weist nur den einen Lenker 10 auf, der als verbindungssteifer Hohlträger ausgebildet ist. Zwischen dem Rahmen 2 und dem Lenker 10 sowie zwischen dem Lenker 10 und dem Verteilergestänge 4 ist jeweils eine als Hydraulikzylinder 11 und 12 ausgebildete Verstelleinrichtung angeordnet. Die Hydraulikzylinder 11,12 sind mittels Leitungen 13 derart verbunden und die Querschnitte sind derart ausgelegt, dass in jedem Falle eine Parallelführung des Verteilergestänges 4 bei der Verstellung aus einer unteren in eine obere Position und in Zwischenpositionen erreicht wird. Des weiteren ist in den Hydraulikleitungen 13 eine Dämpfungseinrichtung in Form von Druckspeichern 14 angeordnet.

## Patentansprüche

1. Landwirtschaftliche Verteilmaschine, insbesondere Feldspritze mit Vorratsbehälter (Flüssigkeitstank), einem Rahmen, einem Verteilergestänge, welches mittels eines Ober- und Unterlenker aufweisenden Parallelogrammgestänges an dem Rahmen befestigt und gegenüber dem Rahmen auf und ab bewegbar angeordnet ist, **dadurch gekennzeichnet, dass** das Parallelogrammgestänge (3) nur einen Unterlenker (6) und nur einen Oberlenker (7) aufweist.

2. Verteilmaschine nach Anspruch 1, **dadurch gekennzeichnet, dass** der Unterlenker (6) als verwindungssteifer Hohlträger ausgebildet ist.

3. Verteilmaschine nach Anspruch 1, **dadurch gekennzeichnet, dass** zwischen dem Rahmen (2) und dem Unterlenker (6) eine vorzugsweise als Hydraulikzylinder (8) ausgebildete Verstelleinrichtung angeordnet ist.

4. Verteilmaschine nach einem oder mehreren der vorstehenden Ansprüche, **dadurch gekennzeichnet, dass** das Verteilergestänge (4) mittels einer Pendelaufhängung (5) an dem Parallelogrammgestänge (3) angeordnet ist.

5. Landwirtschaftliche Verteilmaschine, insbesondere Feldspritze mit Vorratsbehälter (Flüssigkeitstank), einem Rahmen, einem Verteilergestänge, welches mittels einer Lenker aufweisenden Parallelogrammführungsvorrichtung an dem Rahmen befestigt und gegenüber dem Rahmen auf und ab bewegbar angeordnet ist, **dadurch gekennzeichnet, dass** die Parallelogrammführungsvorrichtung (9) nur einen Lenker (10) aufweist.

6. Verteilmaschine nach Anspruch 1, **dadurch gekennzeichnet, dass** der Lenker (10) als verwindungssteifer Hohlträger ausgebildet ist.

7. Verteilmaschine nach Anspruch 1, **dadurch gekennzeichnet, dass** zwischen dem Rahmen (2) und dem Lenker (10) sowie zwischen dem Lenker (10) und dem Verteilergestänge (4) jeweils eine vorzugsweise als Hydraulikzylinder (11,12) ausgebildete Verstelleinrichtung angeordnet ist.

8. Verteilmaschine nach einem oder mehreren der vorstehenden Ansprüche, **dadurch gekennzeichnet, dass** das Verteilergestänge (4) mittels einer Pendelaufhängung (5) an dem Parallelogrammführungsvorrichtung (9) angeordnet ist.
